# NOUVEAU FASCICULE DE BREVET EUROPEEN

(11) **EP 0 502 281 B2**
(45) Date de publication et mention de la décision concernant l'opposition: **17.07.2002**
(45) Mention de la délivrance du brevet: 19.07.1995
(21) Numéro de dépôt: 91401753.8
(22) Date de dépôt: 27.06.1991
(51) Int. Cl.: G09F 3/04, A01G 9/02

(54) **Dispositif pour le conditionnement de plantes horticoles**
Vorrichtung für die Verpackung von Gartenpflanzen
Device for packaging horticultural plants

(30) Priorité: 07.03.1991 FR 9102716
(43) Date de publication de la demande: 09.09.1992
(73) Titulaire: SOPARCO S.A., F-61110 Remalard (FR)
(72) Inventeur: Laguerre, Maxime, F-61110 Remalard (FR)
(74) Mandataire: de Saint-Palais, Arnaud Marie

(56) Documents cités:
- EP-A- 0 390 989
- WO-A-90/05352
- AU-A- 553 710
- AU-B- 5 291 190
- DE-A- 1 786 318
- DE-C- 1 108 974
- DE-C- 2 641 805
- DE-C- 3 247 822
- FR-A- 2 642 266
- US-A- 1 822 390
- US-A- 4 539 766

## Description

La présente invention concerne un dispositif pour la fixation de moyens d'identification sur des récipients tels que, par exemple, des pots destinés au conditionnement de plantes horticoles.

D'une manière générale, on sait que pour effectuer une telle identification, on utilise des étiquettes imprimées en matière relativement rigide qui présentent d'un côté une partie en pointe destinée à être fichée en terre. L'inconvénient de cette solution consiste en ce que l'étiquette n'est pas retenue sur le pot et est donc facilement égarée, notamment lorsque le client s'en saisi pour lire le texte.

Pour supprimer ces inconvénients, on a donc proposé, notamment dans la demande de brevet FR 89 00997 déposée le 27 janvier 1989 au nom du Demandeur, de conformer le bord supérieur du pot pour l'insertion, avec encliquetage, d'une étiquette amovible en matière semi-rigide dont la pointe est elle-même munie de moyens d'encliquetage.

Par ailleurs, on a également proposé à cet effet de former dans un épaulement ou rebord de la partie supérieure du pot, au moins une fente rectiligne dans laquelle peut s'engager la partie en pointe de l'étiquette, dont les deux bords obliques présentent, dans une région où la largeur de la pointe est supérieure à la longueur de la fente, deux encoches formant un rétrécissement de largeur égale ou inférieure à ladite longueur.

La forme des encoches est prévue de manière à assurer un verrouillage de l'étiquette dans la fente du pot, de la façon suivante :
- on engage la partie en pointe du support dans la fente du pot en présentant l'étiquette obliquement par rapport à l'axe de passage de la fente ;
- on poursuit cet engagement jusqu'à ce que le fond de l'encoche vienne buter contre le bord extrême de la fente située du même côté ;
- on fait ensuite pivoter l'étiquette, dans son plan, autour du point de contact, pour la ramener dans l'axe de passage de la fente.

Au cours de ce mouvement de pivotement, il se produit un léger encliquetage précédant l'engagement du second bord extrême de la fente dans la seconde encoche.

L'étiquette se trouve alors verrouillée dans la fente et ne peut être ôtée qu'en effectuant un processus inverse de celui précédemment décrit

Cette solution, a priori séduisante, présente l'inconvénient de ne pas être ergonomique. Elle nécessite en effet, pour effectuer la mise en place de l'étiquette, la combinaison de deux mouvements successifs (translation oblique, rotation) qui ne sont pas évidents à réaliser et ne correspondent pas au mouvement que ferait spontanément l'utilisateur (déplacement dans l'axe de passage de la fente).

En outre, un mouvement inverse permet de retirer l'étiquette, de sorte que l'on ne peut pas qualifier cette dernière d'inviolable.

Le brevet australien AU.B.52911/90 propose quant à lui un dispositif de fixation d'une étiquette sur un pot comportant une structure tubulaire portant sur deux faces intérieures opposées des éléments en forme de cône respectivement centraux et latéraux. Ces éléments en forme de cône agissent sur l'étiquette de manière à déformer progressivement la partie pointue lors de son introduction dans la structure tubulaire. Le verrouillage est obtenu lorsque les éléments en forme de cône latéraux s'engagent dans des encoches prévues dans l'étiquette, à la base de la forme pointue. Cette solution nécessite l'usage de moules relativement complexes que ne se prêtent pas à des cadences de production élevées.

L'invention a donc plus particulièrement pour but de supprimer ces inconvénients au moyen d'une solution simple.

Pour parvenir à ce résultat, elle propose un dispositif faisant intervenir un support d'information plat, relativement flexible, qui présente d'un côté une forme en pointe délimitée par deux bords obliques présentant deux encoches respectives, de préférence symétriques par rapport au plan bissecteur de la pointe, cette forme en pointe étant destinée à venir s'engager jusqu'à hauteur des encoches dans une fente réalisée dans un épaulement ou un rebord de la partie supérieure du récipient.

L'invention, est caractérisée de la façon définie dans la revendication 1.

Avantageusement, la partie en pointe du support pourra être plate, tandis que la fente pourra présenter une partie centrale rectiligne bordée de deux portions latérales incurvées ou même, à l'inverse, une forme centrale incurvée bordée de deux portions latérales droites.

De même, la partie en pointe du support pourra être incurvée et coopérer avec une fente droite.

Des modes d'exécution de l'invention seront décrits ci-après, à titre d'exemples non limitatifs, avec référence aux dessins annexés dans lesquels :
La figure 1 est une vue schématique, en perspective, de la partie supérieure d'un pot présentant un épaulement sur lequel on a réalisé des fentes aux extrémités incurvées ;
La figure 2 montre une étiquette disposée en regard d'une fente du type de celles représentées sur la figure 1 ;
La figure 3 est une variante d'exécution des fentes ;
La figure 4 est une vue en perspective schématique d'une étiquette de forme incurvée ;
La figure 5 est une vue schématique d'une variante d'exécution de l'étiquette représentée figure 4 ;
Les figures 6 et 7 montrent en coupe axiale (figure 6) et en perspective (figure 7) diverses conformations du pot permettant d'assurer le maintien vertical de l'étiquette et son verrouillage sur le pot ;
La figure 8 est une vue partielle d'un pot disposé à l'envers de manière à montrer une disposition destinée à empêcher l'extraction de l'étiquette ;
La figure 9 est une vue de côté d'une autre variante d'exécution d'un pot conformé de manière à assurer le guidage de l'étiquette lors de son introduction dans la fente.

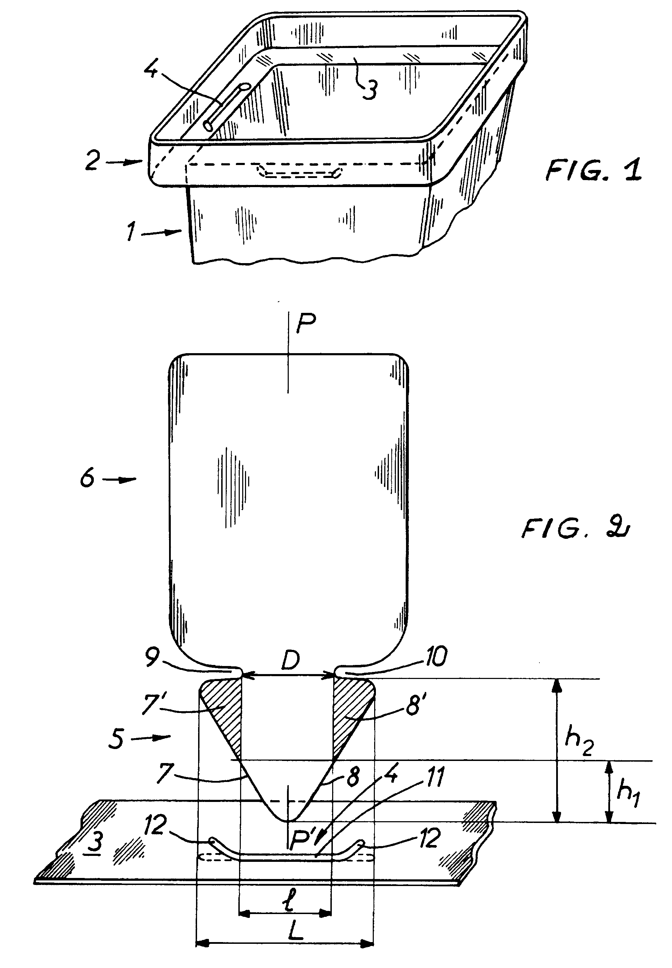

Le pot représenté sur la figure 1 comprend un corps 1, de forme prismatique surmonté d'une corniche plate 2.

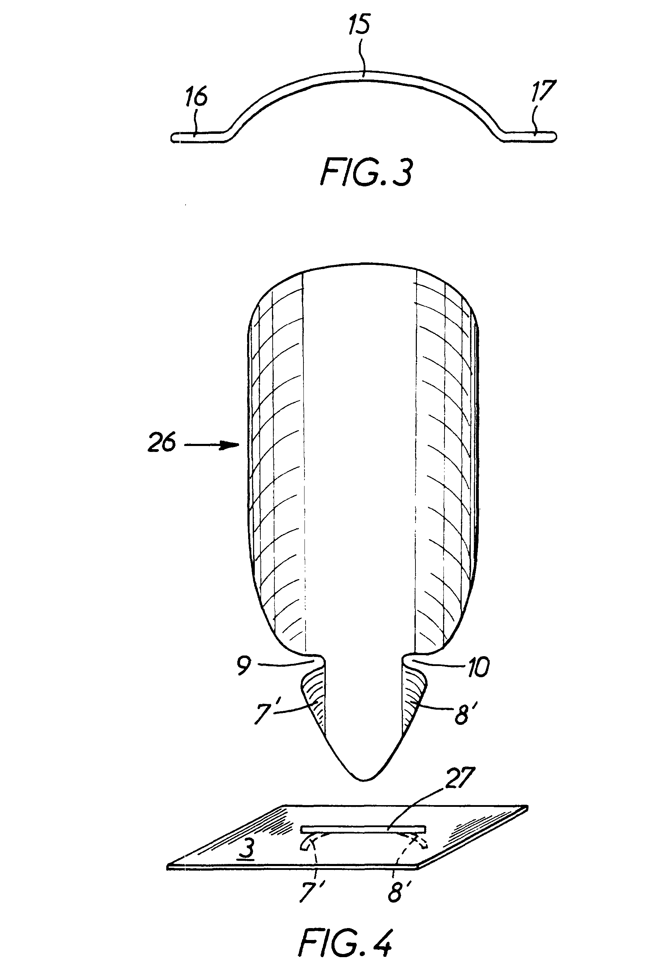

L'épaulement horizontal 3 formé entre le corps du pot et la corniche 2 est muni de fentes telles que 4, dans lesquelles on peut engager la partie pointue d'une étiquette 6 telle que celle représentée sur la figure 2.

Cette étiquette 6 réalisée à partir d'une feuille en matière plastique flexible, présente une forme rectangulaire, dont une extrémité se prolonge par une portion triangulaire 5 à pointe arrondie (partie pointue).

Sur les bords latéraux, obliques, 7, 8 de cette portion 5 sont formées deux encoches respectives 9, 10 symétriques par rapport au plan bissecteur PP' de la portion.

Dans cet exemple, la portion 5 de l'étiquette est destinée à venir s'engager dans une fente présentant une partie centrale rectiligne 11 bordée par deux parties latérales incurvées 12, la partie centrale 11 présentant une longueur 1 sensiblement égale à la distance D séparant le fond des deux encoches 9, 10, tandis que la longueur totale L de la fente correspond sensiblement à la distance séparant les deux bords latéraux 7, 8, au niveau du départ des encoches 9, 10 (côté pointe).

L'engagement de l'étiquette 6 dans la fente 4 s'effectue dans l'axe de passage de la fente (perpendiculairement à l'épaulement 3).

Cet engagement s'effectue tout d'abord librement, jusqu'à ce que la largeur I de la portion triangulaire 5 pénétrant dans la fente 4 devienne égale à la longueur de la partie centrale rectiligne 11 (hauteur h₁ à compter de la pointe).

A partir de cet instant, les bordures latérales 7, 8 de la portion triangulaire se déforment élastiquement pour venir épouser les parties latérales incurvées 12 de la fente 4.

Lorsque les encoches 9, 10 parviennent au niveau de la fente 4 (hauteur h₂), les bordures latérales précédemment déformées (zones latérales 7', 8' indiquées par des hachures) reprennent leur forme initiale (par élasticité) et assurent donc un blocage axial, dans un sens, de l'étiquette 6.

Le blocage axial, dans l'autre sens de l'étiquette, est alors dû au fait que la largeur de la portion triangulaire 5 au-dessus des encoches 9, 10 est supérieure à la longueur de la fente 4.

On obtient ainsi un verrouillage efficace de l'étiquette 6, et ce, sans contrarier le geste naturel de quiconque veut introduire un objet dans un orifice.

De préférence, la longueur de la fente 4 est sensiblement égale à la largeur L de la portion triangulaire 5 au départ des encoches 9, 10.

L'invention ne se limite pas au mode d'exécution précédemment décrit.

Ainsi, la fente 4 pourrait présenter, comme indiqué figure 3, une partie centrale incurvée 15 et des portions latérales rectilignes 16, 17 (éventuellement colinéaires). L'engagement de l'étiquette 6, du type de celle décrite en regard de la figure 1, provoquerait alors successivement :
- une incurvation de la partie centrale de la portion triangulaire 5 ;
- à partir de la hauteur h₁, un repli des zones latérales 7, 8 dans les portions latérales 16, 17 de la fente 4 ;
- lorsque la fente 4 est au niveau de la hauteur h₁, un rabattement des zones latérales 7', 8' tangentiellement à la partie centrale incurvée 15 et, par conséquent, un blocage axial de l'étiquette.

Dans l'exemple représenté sur la figure 4, l'étiquette 26 présente initialement une forme incurvée et coopère avec une fente rectiligne 27. Dans ce cas, la portion de l'étiquette 26 passant dans la fente 27 se déforme progressivement pour devenir momentanément rectiligne. Lorsque la fente 27 est au niveau des encoches 9, 10, les zones latérales 7', 8' situées immédiatement au-dessous reprennent leur forme incurvée en assurant un blocage axial.

Bien entendu, d'une façon analogue, dans une disposition de ce genre, l'étiquette pourrait être plane, seules les zones latérales 7' et 8' étant incurvées ou s'étendant obliquement par rapport au reste de l'étiquette.

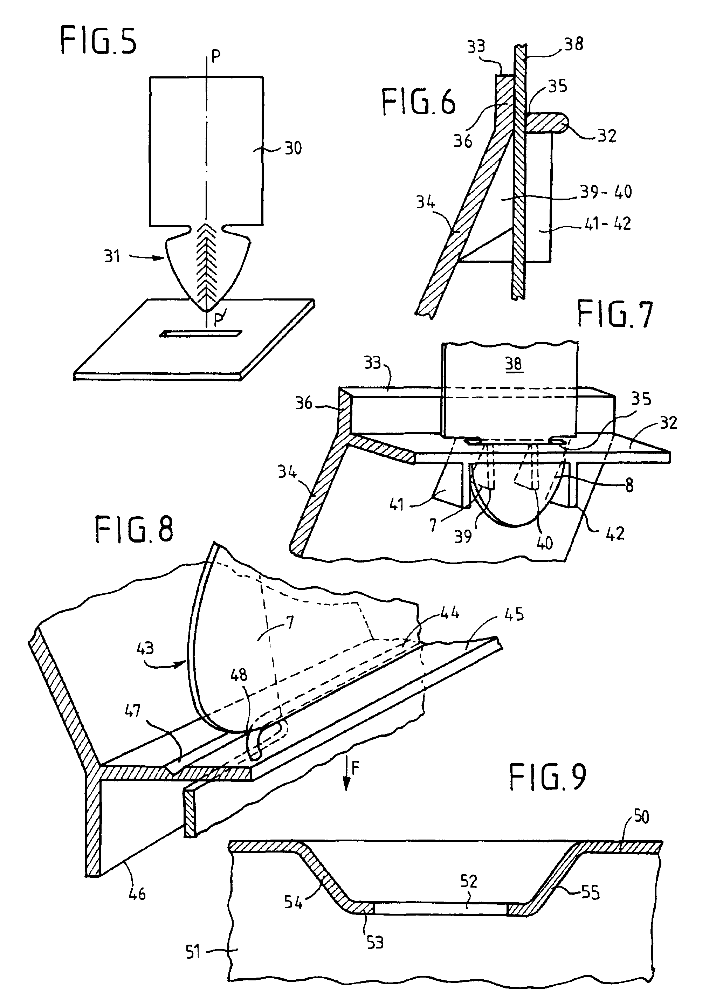

De même, l'étiquette pourrait présenter, comme indiqué sur la figure 5, une partie supérieure 30 sensiblement plane prolongée par une partie inférieure pointue 31 pliée de façon rémanente le long de l'axe longitudinal de symétrie PP', de manière à présenter une forme diédrique déformable élastiquement.

Les dispositions illustrées sur les figures 6 à 9, qui sont utilisables dans les modes d'exécution précédemment décrits, ont pour objet d'assurer notamment :
- le maintien en position verticale de l'étiquette,
- le verrouillage de l'étiquette pour interdire son extraction, une fois qu'elle a été engagée,
- le guidage de l'étiquette lors de son introduction dans la fente.

Dans l'exemple représenté sur les figures 6 et 7, le pot comprend, au lieu de la corniche, un simple épaulement périphérique 32 situé légèrement au-dessous du bord supérieur 33 des parois latérales 34 du pot.

Les fentes 35 destinées à recevoir les étiquettes sont réalisées dans cet épaulement 32, sensiblement contre la paroi 34, de manière à ce que la portion de paroi 36 s'étendant au-dessus de l'épaulement 32 serve d'élément de guidage.

Le maintien de l'étiquette 38 en position droite est assuré au moyen d'un couple de nervures verticales 39, 40 dont le bord antérieur est situé dans l'alignement de la face antérieure de la portion de paroi 36.

Le verrouillage de l'étiquette est ici renforcé par deux nervures latérales verticales 41, 42 disposées de part et d'autre de la fente 35. Ces deux nervures 41, 42 dont la largeur correspond sensiblement à celle de l'épaulement 32 ont pour but, d'une part, d'empêcher un basculement de l'étiquette 38 dans son plan ainsi que toute possibilité de translation de cette étiquette le long de la fente 35 et, d'autre part, d'éviter que l'on agisse sur les bords latéraux 7, 8 de l'étiquette, en vue de son extraction.

Le dispositif illustré sur la figure 8 fait intervenir une étiquette plate 43 et une fente 44 aux extrémités incurvées, par exemple d'une façon similaire à celle représentée sur la figure 2. Cette fente 44 est réalisée sur un épaulement périphérique 45 situé légèrement en dessous du bord supérieur 46 du pot. Cet ensemble a été partiellement représenté à l'envers de manière à faire apparaître une rainure 47 réalisée dans la face inférieure de l'épaulement 45 dans l'axe de la fente 44.

Ainsi, lorsqu'on exerce une traction sur l'étiquette 43 dans le sens de la flèche F, les bordures supérieures 48 des bords latéraux 7, 8 s'engagent dans la rainure 47 et sont donc verrouillées latéralement. Il devient alors impossible de courber les bords 7, 8 pour les faire passer dans les extrémités incurvées de la fente 44. Il est clair que cette mesure, qui vise à interdire l'extraction de l'étiquette 43, peut être prévue dans les autres modes d'exécution précédemment décrits.

Dans l'exemple représenté sur la figure 9, l'épaulement périphérique 50 prévu à la partie supérieure des parois latérales du pot 51, présente des sinuosités de forme trapézoïdale formant des évasements orientés vers le haut.

Les fentes de fixation 52 des étiquettes sont alors réalisées dans les portions 53 de l'épaulement 50 qui constituent le fond des évasements.

Il apparaît clairement que les régions obliques 54, 55 de l'épaulement 50 qui bordent les portions 53 servent d'éléments de guidage qui facilitent considérablement l'engagement des étiquettes. Cet engagement pourra être rendu encore plus aisé en prévoyant une fente dont la région centrale est plus large que dans les régions d'extrémité.

Grâce à ces différentes dispositions, éventuellement combinées entre elles, on obtient une grande fiabilité de la fixation de l'étiquette (le but étant de rendre l'extraction pratiquement impossible) et ce, avec une grande simplicité et un faible coût de fabrication ainsi qu'une grande facilité de mise en place de l'étiquette.

## Revendications

1. Dispositif pour le conditionnement de plantes horticoles, comprenant un récipient (1) et des moyens d'identification (6) fixés sur ce récipient, ces moyens d'identification (6) se présentant sous la forme d'un support plat réalisé à partir d'une feuille en matière plastique flexible, ce support comprenant une partie pointue (5) délimitée par deux bords latéraux obliques (7, 8) présentant deux encoches respectives (9, 10), cette partie pointue (5) étant destinée à venir jusqu'à hauteur des encoches (9, 10) dans une fente (4) réalisée dans un épaulement ou rebord (3) horizontal de la partie supérieure du récipient,
**caractérisé en ce que** la longueur de la fente est sensiblement égale à la largeur L de la partie pointue (5) au départ des encoches (9, 10), et **en ce que** la susdite partie pointue (5) et la susdite fente (4) sont conformées de manière à ce que les bordures latérales (7, 8) de la partie pointue (5) soient déformées élastiquement par les parties latérales (12) de la fente (4) jusqu'à ce que les encoches (9, 10) atteignent le niveau de la fente (4) et qu'ensuite, en raison de la présence de ces encoches (9, 10), les bordures latérales (7, 8) reprennent leur forme initiale en bloquant axialement le support dans la fente (4).

2. Dispositif selon la revendication 1,
**caractérisé en ce que** la partie pointue (5) du support (6) est plate, tandis que la fente (4) présente une partie centrale rectiligne (11) bordée de deux portions latérales incurvées (12).

3. Dispositif selon la revendication 2,
**caractérisé en ce que** la partie pointue (5) est plate, tandis que la fente (4) présente une partie centrale incurvée (15) bordée de deux portions latérales rectilignes (16, 17).

4. Dispositif selon la revendication 1,
**caractérisé en ce que** la partie pointue (5) du support (6) est incurvée, tandis que la fente (17) est rectiligne.

5. Dispositif selon la revendication 4,
**caractérisé en ce que** le support (6) est plat, seule des zones latérales (7, 8) de la partie pointue (5) étant incurvées ou s'étendant obliquement par rapport au reste du support.

6. Dispositif selon l'une des revendications précédentes,
**caractérisé en ce que** le support présente une partie supérieure (30) sensiblement plane, prolongée par une partie inférieure pointue (31) pliée de façon rémanente le long de l'axe longitudinal de symétrie (PP') du support, de manière à présenter une forme diédrique déformable élastiquement, cette partie inférieure pointue (31) étant destinée à s'engager dans une fente rectiligne.

7. Dispositif selon l'une des revendications précédentes,
**caractérisé en ce que** la paroi latérale du pot comprend au-dessous de la fente (35), au moins une nervure (39, 40) servant à assurer un maintien en position du support (38).

8. Dispositif selon l'une des revendications précédentes,
**caractérisé en ce que** la paroi latérale du pot comprend, de part et d'autre de la fente (35), deux nervures latérales verticales (41, 42) destinées à empêcher un basculement du support (38) dans son plan ainsi que toute possibilité de translation de ce support (38) le long de la fente (35).

9. Dispositif selon l'une des revendications précédentes,
**caractérisé en ce que** la face intérieure de l'épaulement sur lequel est pratiquée la fente (44) est munie de rainures (47) disposées de manière à recevoir les bordures supérieures (48) des bords latéraux (7, 8) de la partie pointue du support (43).

10. Dispositif selon l'une des revendications précédentes,
**caractérisé en ce que** l'épaulement périphérique (50) prévuà la partie supérieure des parois latérales du pot (51) présente des sinuosités formant des évasements orientés vers le haut dans le fond desquels est réalisée la susdite fente (52).

11. Dispositif selon l'une des revendications précédentes,
**caractérisé en ce que** la largeur de la fente est plus grande dans sa région centrale que dans ses régions d'extrémité.

## Patentansprüche

1. Vorrichtung für das Konfektionieren von Gartenpflanzen, bestehend aus einem Behälter (1) und Kennzeichnungsmitteln (6), die auf diesem Behälter befestigt werden, wobei diese Kennzeichnungsmittel (6) die Form eines flachen Trägers besitzen, der aus einem flexiblen Kunststoffblatt hergestellt wird. Dieser Träger beinhaltet einen spitz zulaufenden Teil (5), der von zwei schrägen seitlichen Rändern (7,8) begrenzt wird, die zwei Schlitze (9,10) aufweisen, wobei dieser spitz zulaufende Teil (5) dafür bestimmt ist, um bis zur Höhe der Schlitze (9,10) in einen Einschnitt (4) eingesteckt zu werden, der in einer horizontalen Schulter oder einem horizontalen Rand (3) des oberen Teils des Behälters eingerichtet worden ist,
**dadurch gekennzeichnet, daß** die Länge des Einschnitts annähernd mit der Breite L des spitz zulaufenden Teils (5) am Beginn der Schlitze (9,10) übereinstimmt und der oben genannte spitz zulaufende Teil (5) und der oben genannte Einschnitt (4) so ausgeformt sind, daß die seitlichen Ränder (7,8) des spitz zulaufenden Teils (5) anhand der seitlichen Teile (12) des Einschnitts (4) elastisch verformt werden, bis die Schlitze (9,10) die Höhe des Einschnitts (4) erreichen und die seitlichen Ränder (7,8) sodann auf Grund des Vorhandenseins dieser Schlitze (9,10) ihre anfängliche Form wieder annehmen, wobei sie den Träger axial im Einschnitt (4) blockieren.

2. Vorrichtung nach Anspruch 1, **dadurch gekennzeichnet, daß** der spitz zulaufende Teil (5) des Trägers flach ist, während der Schlitz (4) einen von zwei gekrümmten Seitenbereichen (12) flankierten zentralen geradlinigen Bereich (11) aufweist.

3. Vorrichtung nach Anspruch 2, **dadurch gekennzeichnet, daß** der spitz zulaufende Teil (5) flach ist, während der Schlitz (4) einen von zwei geradlinigen Seitenbereichen (16,17) flankierten gekrümmten zentralen Bereich (15) aufweist.

4. Vorrichtung nach Anspruch 1, **dadurch gekennzeichnet, daß** der spitz zulaufende Teil (5) des Trägers (6) gekrümmt ist, während der Schlitz (17) geradlinig ist.

5. Vorrichtung nach Anspruch 4, **dadurch gekennzeichnet, daß** der Träger (6) flach ist und nur Seitenzonen (7,8) des spitz zulaufenden Teils (5) gekrümmt sind oder in Bezug auf den Rest des Trägers schräg verlaufen.

6. Vorrichtung nach einem der vorhergehenden Ansprüche, **dadurch gekennzeichnet, daß** der Träger einen im wesentlichen ebenen oberen Bereich (30) aufweist, verlängert durch eine spitzen unteren Bereich (31), der dauerhaft entlang der Längs-Symmetrieachse (PP') des Trägers gefaltet ist, um eine elastisch verformbare V-Form aufzuweisen, wobei dieser spitze untere Bereich (31) in einem geradlinigen Schlitz eindringen soll.

7. Vorrichtung nach einem der vorhergehenden Ansprüche, **dadurch gekennzeichnet, daß** die Seitenwand des Topfes unterhalb des Schlitzes (35) mindestens eine Rippe (39,40) aufweist, die den Träger (38) in Stellung halten soll.

8. Vorrichtung nach einem der vorhergehenden Ansprüche, **dadurch gekennzeichnet, daß** die Seitenwand des Topfs zu beiden Seiten des Schlitzes (35) zwei seitliche senkrechte Rippen (41,42) aufweist, die ein Kippen des Trägers (38) in seiner Ebene und jede Möglichkeit der seitlichen Verschiebung dieses Trägers (38) entlang des Schlitzes (35) verhindern soll.

9. Vorrichtung nach einem der vorhergehenden Ansprüche, **dadurch gekennzeichnet, daß** die untere Fläche des Vorsprungs, in dem sich der Schlitz (44) befindet, mit Nuten (47) versehen ist, die so angeordnet sind, daß sie die oberen Ränder (48) der Seitenkanten (7,8) des spitz zulaufenden Teils des Trägers (43) aufnehmen.

10. Vorrichtung nach einem der vorhergehenden Ansprüche, **dadurch gekennzeichnet, daß** der im oberen Bereich der Seitenwände des Topfes (51) vorgesehene periphere Vorsprung (50) Krümmungen aufweist, die nach oben gerichtete Ausbuchtungen bilden, an deren Grund der Schlitz (52) ausgebildet ist.

11. Vorrichtung nach einem der vorhergehenden Ansprüche, **dadurch gekennzeichnet, daß** die Breite des Schlitzes in seinem zentralen Bereich größer ist als in seinem Endbereichen.

## Claims

1. Device for packaging horticultural plants, said device including a receptacle (1) and identification means (6) fixed on this receptacle, these identification means (6) appearing in the form of a flat support embodied from a flexible plastic sheet, said support including a pointed portion (5) delimited by two oblique lateral edges (7, 8) having two respective notches (9, 10), this pointed portion (5) being intended to arrive up to the height of the notches (9, 10) in a slit (4) made in a shoulder or horizontal edge (3) of the upper portion of the receptacle, **characterised in that** the length of the slit is approximately equal to the width L of the pointed portion (5) starting from the notches (9, 10), and **in that** said pointed portion (5) of said slit (4) are shaped so that the lateral edges (7, 8) of the pointed portion (5) are elastically warped by the lateral portions (12) of the slit (4) until the notches (9, 10) reach the level of the slit (4) and that, owing to the presence of these notches (9, 10) the lateral edges (7, 8) then resume their initial shape by axially locking the support in the slit (4).

2. Device according to claim 1, **characterised in that** the pointed portion (5) of the support (6) is flat, whereas the slit (4) has one central rectilinear portion (11) edged by two bent inward lateral portions (12).

3. Device according to claim 2, **characterised in that** the pointed portion (5) is flat, whereas the slit (4) has a bent inward central portion (15) edged by two rectlinear lateral portions (16, 17).

4. Device according to claim 1, **characterised in that** the pointed portion (5) of the support (6) is bent inward, whereas the slit (17) is rectilinear.

5. Device according to claim 4, **characterised in that** the support (6) is flat, only the lateral zones (7, 8) of the pointed portion (5) being bent inward or extending obliquely with respect to the remainder of the support.

6. Device according to one of the preceding claims, **characterised in that** the support has an approximately flat upper portion (30) extended by a lower pointed portion (31) folded residually along the longitudinal axis of symmetry (PP') of the support so as to have an elastically ductile diehedral shape, this lower pointed portion (31) being used to be engaged in a rectilinear slit.

7. Device according to one of the preceding claims, **characterised in that** the lateral wall of the container includes below the slit (35) at least one rib (39, 40) used to keep the support (38) in position.

8. Device according to one of the preceding claims, **characterised in that** the lateral wall of the container includes on both sides of the slit (35) two vertical lateral ribs (41, 42) intended to prevent the support (38) tilting inside its place and being moved along the slit (35).

9. Device according to one of the preceding claims, **characterised in that** the lower face of the shoulder on which the slit (44) is embodied is fitted with grooves (47) placed in such a way as to receive the upper borders (48) of the lateral edges (7, 8) of the pointed portion of the support (43).

10. Device according to one of the preceding claims, **characterised in that** the peripheral shoulder (50) provided at the upper portion of the lateral walls of the container (51) have windings forming splays orientated upwards in the bottom where said slit (52) is embodied.

11. Device according to one of the preceding claims, **characterised in that** the width of the slit is larger in its central area than in its extremity areas.
